Europäisches Patentamt

European Patent Office

Office européen des brevets

(11) Numéro de publication: **0 274 319 B1**

(12) **FASCICULE DE BREVET EUROPEEN**

(45) Date de publication de fascicule du brevet: **04.03.92** (51) Int. Cl.⁵: **C08L 75/00**, C08F 299/06

(21) Numéro de dépôt: **87402899.6**

(22) Date de dépôt: **18.12.87**

(54) **Composition solide thermoplastique radioréticulable et produits durcissables obtenus avec cette composition.**

(30) Priorité: **19.12.86 FR 8617788**

(43) Date de publication de la demande:
**13.07.88 Bulletin 88/28**

(45) Mention de la délivrance du brevet:
**04.03.92 Bulletin 92/10**

(84) Etats contractants désignés:
**BE DE ES FR GB IT NL**

(56) Documents cités:
**EP-A- 0 197 682**

(73) Titulaire: **SOCIETE NATIONALE DES POUDRES
ET EXPLOSIFS
12, quai Henri IV
F-75181 Paris Cédex 04(FR)**

(72) Inventeur: **Pattein, Jacky Société Nationale
des Poudres
et Explosifs rue des Mésanges
F-24100 Bergerac(FR)**
Inventeur: **Le Roy, Patrice
3 avenue Foch
F-91760 Itteville(FR)**

(74) Mandataire: **Pech, Bernard
SNPE - Service Propriété Industrielle 12,
Ouai Henri IV
F-75181 Paris Cédex 04(FR)**

## Description

L'invention concerne une composition solide de résines thermoplastiques pouvant être durcie par application d'un rayonnement, et des produits obtenus par mise en forme de la composition, avant application du rayonnement.

L'invention concerne plus particulièrement une composition solide comprenant un polymère thermoplastique solide et un oligomère radioréticulable, cette composition solide se présentant, avant durcissement par application d'un rayonnement, sous forme d'un produit manipulable et stockable.

On connait des compositions de résines thermoplastiques auxquelles on ajoute un plastifiant, pour notamment en abaisser la température de ramollissement et donc de moulage. Toutefois, l'addition d'un plastifiant a comme inconvénient majeur d'affecter les propriétés mécaniques finales du produit obtenu par mise en oeuvre de ces compositions, et plus particulièrement les propriétés mécaniques à température élevée.

Pour améliorer ces propriétés mécaniques, il a été proposé d'ajouter un agent de réticulation aux compositions de résines thermoplastiques, cet agent créant un réseau avec les chaines des polymères thermoplastiques. Toutefois les compositions de ce type ont généralement une température de ramollissement, avant réticulation, relativement élevée, par exemple supérieure à 100°C.

En outre, les compositions connues sont généralement réticulées ou durcies par un traitement thermique requérant une consommation d'énergie élevée et un cycle de fabrication relativement long.

Pour supprimer ce traitement thermique, on a proposé des résines ou polymères thermoplastiques radioréticulables. Ces résines sont généralement liquides et pâteuses et n'ont pas de tenue mécanique à température ambiante ce qui requiert des conditions particulières de stockage et une mise en oeuvre par coulée, le durcissement devant être réalisé avant démoulage, par application d'un rayonnement.

La présente invention a notamment pour but de remédier à ces inconvénients en proposant une composition solide comprenant au moins un polymère thermoplastique solide totalement élaboré (ne contenant pas d'insaturations) et un oligomère radioréticulable. Cette composition solide à température ambiante a une température de ramollissement relativement basse, inférieure à 120°C, permettant une mise en oeuvre aisée. En outre, les produits obtenus par la mise en oeuvre de cette composition sont manipulables, façonnables notamment par déformation, et facilement stockables, avant le durcissement de la composition obtenu par exposition du produit à un rayonnement.

A cet effet, l'invention propose une composition solide thermoplastique radioréticulable comprenant essentiellement au moins un polymère solide thermoplastique et un oligomère radioréticulable contenant au moins deux insaturations éthyléniques, chacune de ces insaturations étant située soit en bout de chaîne, soit en position pendante.

Le rapport pondéral entre le (ou les) polymère thermoplastique solide et l'oligomère radioréticulable est respectivement compris entre 55/45 et 96/4, de préférence entre 70/30 et 96/4.

Selon une caractéristique de l'invention, les insaturations éthyléniques de l'oligomère radioréticulable sont du type acrylique, méthacrylique, allylique ou vinylique. De préférence, ce sont des insaturations de type acrylique qui sont les plus réactives et les plus sensibles aux rayonnements, notamment aux rayonnements U.V..

Selon une autre caractéristique de l'invention, la composition est durcissable par exposition à un rayonnement à une température inférieure ou égale à la température de ramollissement de celle-ci, de préférence inférieure. Ainsi, il est possible de durcir ces compositions solides par exposition à un rayonnement, à température ambiante, le rendement de réticulation de l'oligomère s'élèvant avec l'élévation de la température à laquelle est réalisée l'exposition au rayonnement.

Selon une autre caractéristiques de l'invention, la température d'exposition aux rayonnements est supérieure à la température de transition vitreuse (Tg) de la composition.

Cette température de transition vitreuse de la composition est voisine de celle du polymère thermoplastique utilisé, ou du polymère thermoplastique auquel a été ajouté un plastifiant.

La composition selon l'invention est solide à température ambiante et peut être obtenue sous forme de bloc compact, de feuille solide, manipulable et stockable. En outre, un bloc compact de la composition de l'invention peut être découpé en feuille, broyé en granulés, par exemple, sans pour cela entraîner un durcissement de la composition par réticulation de l'oligomère.

La transformation de la composition solide dans une forme désirée et permettant une mise en oeuvre facile peut être effectuée par des procédés mécaniques à partir de la composition solide elle-même ou d'une solution de celle-ci.

Ainsi les granulés obtenus peuvent être transformés en feuille, plaque, tige, jonc, tube, barre par différents procédés tels que l'extrusion, la pultrusion, le calendrage, le moulage par injection ou par

2

compression, par exemple. Il est également possible de réaliser avec la composition de l'invention, avant son durcissement, une imprégnation de fibres, tissus, mats, par exemple, soit avec une solution de cette composition dans un solvant, soit avec la composition fondue.

Les produits ainsi obtenus sont solides et peuvent être stockés, manipulés, à température ambiante, sans précaution particulière. En outre ces produits ne sont pas entièrement élaborés, car la composition n'est pas durcie. Ainsi, il est possible de les façonner à la forme désirée par déformation, et notamment par thermoformage, la forme du produit ainsi obtenue étant figée par exposition à un rayonnement provoquant la réticulation de l'oligomère.

Les produits obtenus après réticulation ont de bonnes propriétés mécaniques, même à température élevée.

Dans la présente invention, le terme "oligomère" désigne aussi bien un monomère, qu'un oligomère ou un prépolymère pouvant comprendre jusqu'à plusieurs dizaines de motifs, ou un mélange de ces produits.

Selon une caractéristique de l'invention, l'oligomère précité a une masse moléculaire compris entre 400 et 6 000 environ, de préférence entre 400 et 4 500.

Dans un mode de réalisation préféré de l'invention l'oligomère contient au moins deux fonctions acryliques et de préférence deux ou trois fonctions acryliques.

L'oligomère peut être aliphatique, aromatique, arylaliphatique ou alkylaromatique.

Dans un mode préféré de réalisation de l'invention, les oligomères sont des polyuréthannes obtenus à partir d'un polyisocyanate sur lequel on fait réagir un composé hydroxyacrylate ou hydroxyméthacrylate, par exemple.

Avantageusement, le composé hydroxyacrylate est l'hydroxyéthylacrylate.

Le polyisocyanate peut être soit un polyisocyanate aromatique soit un polyisocyanate aliphatique.

De préférence le polyisocyanate obtenu par action d'un diisocyanate avec un polyol, avantageusement avec un diol pour obtenir un oligomère difonctionnel.

Comme polyols, particulièrement convenables pour l'invention, on peut citer les polyétherpolyols, polyesterpolyols, polyétherpolyesterpolyols, les polycaprolactones, le polytétrahydrofuranne, les mélanges de ces composés.

Les oligomères peuvent également être obtenus par action d'un acide contenant une insaturation éthylénique en bout de chaîne sur un polyol ou un polyépoxyde.

Les acides préférés de l'invention sont notamment l'acide acrylique et l'acide méthacrylique.

Comme polyols convenables, on peut citer par exemple les polyétherpolyols, polyesterpolyols, polyétherpolyesterpolyols, polycaprolactones, polytétrahydrofurannes, polycarbonatepolyols, polybutadiènes hydroxylés , les polyuréthannes contenant des fonctions hydroxyles terminales, et les mélanges de ces composés.

Comme composés polyépoxydes convenables, on peut citer par exemple les composés obtenus à partir de l'éther glycidique du Bisphénol A ou de ses homologues supérieurs.

Les deux procédés précités sont les procédés préférés de l'invention. Toutefois, tout composé contenant au moins deux insaturations éthyléniques réactives sous l'effet d'un rayonnement, chacune de ces insaturations étant située soit en bout de chaîne soit en position pendante est convenable pour l'invention, à la condition qu'il soit compatible avec le polymère thermoplastique associé.

Un oligomère sera dit compatible avec un polymère thermoplastique s'il se mélange avec le polymère, et si l'oligomère n'exsude pas du mélange pendant la mise en oeuvre de la composition, notamment au cours de l'extrusion, du calandrage par exemple, ou pendant le stockage du produit non réticulé.

Ces composés peuvent être obtenus par des procédés appropriés connus.

Selon une autre caractéristique de l'invention, le (ou les) polymère thermoplastique solide a une masse moléculaire comprise entre 10 000 et 200 000 environ, de préférence entre 40 000 et 150 000.

De préférence, ce polymère est un polyuréthanne thermoplastique solide obtenu à partir d'au moins un polyol avec au moins un polyisocyanate en présence d'un diol court extenseur de chaîne.

Comme polyols convenables on peut par exemple citer les polyétherpolyols, les polyesterpolyols, les polyétherpolyesterpolyols, les polycarbonatepolyols, le polytétrahydrofuranne, les polycaprolactones, les polybutadiènes hydroxylés et les mélanges de ces composés.

Ce polyuréthanne thermoplastique solide est éventuellement utilisé en mélange avec un plastifiant.

Comme diols courts extenseurs de chaîne convenables on peut par exemple citer le butane diol 1-4, le butane diol 1-3, le propane diol et le cyclohexanediméthanol.

Comme polyisocyanates convenables on peut par exemple utiliser tout isocyanate conduisant par réaction avec un des polyols énumérés ci-dessus à un polymère thermoplastique solide.

D'autres polymères thermoplastiques peuvent être utilisés tels que, par exemple, le polychlorure de vinyle, le polyvinyl butyrate, éventuellement en mélange avec un plastifiant.

3

Selon une variante préférée de l'invention le polymère thermoplastique solide est un polyuréthanne aliphatique et l'oligomère radioréticulable est un oligomère aliphatique acrylique ou méthacrylique, de préférence acrylique.

Dans un mode préféré de réalisation de l'invention, et notamment pour obtenir une meilleure compatibilité entre l'oligomère radioréticulable et le polymère thermoplastique solide, ces deux produits sont des polyuréthannes obtenus à partir soit d'un même polyol, soit d'un même polyisocyanate.

Selon une autre caractéristique de l'invention, la composition comprend un photoinitiateur pour permettre une réticulation de l'oligomère par exposition aux rayonnements U.V..

Les compositions de l'invention peuvent également comprendre des additifs usuellement employés dans les matériaux plastiques, tels que, par exemple, des charges renforçantes, des charges modifiant la conductibilité thermique ou électrique du matériau, des colorants, des pigments, des promoteurs d'adhésion, des stabilisants.

Toutefois, ces additifs ne doivent pas former écran vis à vis des rayonnements, cette condition étant notamment importante lorsque l'on utilise un rayonnement U.V..

Comme rayonnement, on peut employer, par exemple, des rayonnements électromagnétiques, un système à bombardement électronique, des rayonnements photoélectriques. Le rayonnement préféré de l'invention est le rayonnement U.V..

Les compositions de l'invention sont utiles pour réaliser des objets divers, et plus particulièrement des feuilles d'emballage formées à la forme du produit à envelopper, des éléments de prothèse, par exemple.

Les exemples suivants, donnés uniquement à titre indicatif illustrent plus clairement l'invention, et montrent d'autres détails et avantages de l'invention.

Exemple 1

On prépare une composition conforme à l'invention en mélangeant un polymère polyuréthane thermoplastique de masse moléculaire 125 000 avec un oligomère acrylique de masse moléculaire 1 300, en présence d'un solvant (tetrahydrofuranne). La solution obtenue est à 20 % d'extrait sec.

Le polyuréthane thermoplastique est obtenu par réaction d'un diisocyanate, le dicyclohexylméthylènediisocyanate avec un polyol, un polycaprolactone de masse 1 000, en présence d'un extenseur de chaîne, le butanediol 1,4. Pour obtenir une masse moléculaire de 125 000, on utilise un rapport fonctions isocyanates fonctions hydroxyles voisin de 1,01 (NCO/OH).

L'oligomère acrylique est obtenu par réaction du dicyclohexylméthylènediisocyanate sur un polyesterdiol de masse moléculaire 600, puis réaction de l'hydroxyéthylacrylate sur le composé à fonctions isocyanates terminales ainsi obtenus.

A la solution on ajoute un photoinitiateur ; l'Irgacure 651 (nom de commercialisation par la société CIBA-GEIGY). La composition a la formule suivante, (les proportions étant exprimées en partie en poids) :

| | |
|---|---|
| polyuréthanne thermoplastique (Tg = -30 °C) | 70 parties |
| oligomère acrylique | 30 parties |
| photoinitiateur | 2 parties |

Le solvant est évaporé, et on obtient ainsi un film sec manipulable, mais déformable.

On détermine la température de ramollissement du film en le plaçant en sandwich entre deux plaques de verre sur lesquelles on applique une pression de l'ordre de 1 MPa. Cet ensemble est monté en température, la température de ramollissement ($t_m$) appelée également température de moulage étant celle à laquelle le film change d'aspect, notamment en devenant transparent.

On détermine également la tenue en température du film, toujours avec le même ensemble, par la mesure de la température à laquelle il y a fluage du film, rendant possible le déplacement des plaques de verre.

Le taux de conversion des insaturations éthyléniques est déterminé par analyse infra-rouge de la composition.

Par ailleurs, la réticulation de l'oligomère est également montrée par un essai de solubilisation de la composition et mesure du taux d'insoluble obtenu, après extraction dans le chlorure méthylène à reflux.

Ainsi, pour la composition de cet exemple 1, on a observé les résultats suivants :

4

| Composition | Irradiation | | Taux de conversion des insaturations | Insoluble dans $CH_2Cl_2$ | $t_m$ avant irradiation | Tenue en température |
|---|---|---|---|---|---|---|
| | Température | Durée | | | | |
| Polyuréthanne thermoplastiquè seul M : 125000 | sans irradiation | | 0 % | 0 % | 120-130˚C | 140˚-150˚C (1) |
| Composition de l'exemple 1 | sans irradiation | | 0 % | 0 % | 75˚C | 110-120˚C (1) |
| | 20˚C | 0,5s | 90 à 100 % | 80 % | - | 140˚C (2) |

(1) fluage
(2) pas de fluage, mais décollement brutal d'une plaque de verre.

EP 0 274 319 B1

L'irradiation a été réalisée par exposition à une lampe U.V. d'une puissance de 80 W/cm.

Exemple 2 et 2 bis

Les produits de départ sont identiques, mais le mélange contient 18 parties en poids d'oligomère acrylique pour 100 parties de polyuréthanne thermoplastique.

De plus, le mélange des produits est effectué en milieu fondu et non en milieu solvant.

On obtient ainsi un bloc dans lequel on peut découper une feuille.

| Composition | Irradiation | | Taux de conversion des insaturations | Insoluble dans $CH_2Cl_2$ | $t_m$ avant irradiation | Tenue en température |
|---|---|---|---|---|---|---|
| | Température | Durée | | | | |
| Exemple 2 | 25°C | 0,50s | 90-100% | 82 % | 85°C | >160° (2) |
| Exemple 2 bis | 85°C (*) | 0,50s | 100% | 100% | 85°C | >160° (2) |

(2) pas de fluage, mais décollement brutale d'une plaque de verre

(*) température de moulage.

On a également mis en évidence par analyse infrarouge le fait qu'avant irradiation, sensiblement aucune des fonctions acryliques de l'oligomère acrylique n'avait été détruite ou n'avait réagi avec une autre espèce chimique.

Exemple 3

On mélange dans un réacteur un polycaprolactone de masse 1 000, un dicyclohexylméthylènediisocyanate, un oligomère acrylique de masse 1 300 (identique à celui utilisé dans les exemples 1 et 2), un extenseur de chaine, le butanediol 1,4, et un photoinitiateur (l'Irgacure 651).

Le mélange est coulé dans un moule puis l'ensemble est porté à 125°C pendant 20 heures.

Au cours de ce traitement thermique, le polyuréthanne thermoplastique est élaboré, sans que l'oligomère acrylique participe à la réaction.

En effet, une analyse infrarouge montre que toutes les fonctions acryliques ajoutées sont encore présentes après la cuisson du mélange.

Les quantités de produit ajoutées au départ sont calculées pour avoir la composition finale suivante :

| | |
|---|---|
| polyuréthanne thermoplastique de M : 100 000 (Tg $\simeq$ - 30°C) | 100 parties |
| oligomère acrylique M : 1 300 g | 9 parties |
| photoinitiateur | 5 parties |

La quantité de diisocyanate et d'extenseur de chaine est calculée pour avoir un rapport NCO/OH $\simeq$ 1,01 et une masse moléculaire du polyuréthanne thermoplastique d'environ 100 000.

Après cuisson et refroidissement, on obtient un bloc solide qui peut être soit découpé en feuille, soit broyé en granulés.

Les granulés obtenus dans cet exemple sont ensuite mis en oeuvre par extrusion pour former une bande de largeur 10 cm et d'épaisseur 1 mm.

On a également montré, par analyse infrarouge, que seule une faible partie des fonctions acryliques est consommée pendant l'extrusion.

Dans le tableau suivant sont rassemblées les propriétés du produit ainsi obtenu, d'une part avant exposition aux rayonnements U.V. et d'autre part après irradiation.

6

| Composition de l'exemple 3 | Irradiation | | Taux de conversion des insaturations | Insoluble dans $CH_2Cl_2$ | $t_m$ avant irradiation | Tenue en température |
|---|---|---|---|---|---|---|
| | Température | Durée | | | | |
| Après cuisson et refroidissement | sans irradiation | | 0% | 0% | 100-120˚C | 120˚C 130˚C (1) |
| après extrusion | sans irradiation | | 20 % | 0% | 90-100˚C | 120-130˚C (1) |
| | 25˚C | 0,5s | 90 à100% | 100% | - | >160˚C (2) |

(1), (2), voir exemple 1

Les propriétés mécaniques caractéristiques en traction du produit après irradiation sont mesurées à 23°C, 450 mm/min (vitesse d'application de la traction)

| | |
|---|---|
| contrainte à 100 % allongement | 5,9 MPa |
| contrainte à la rupture | 22 MPa |
| allongement à la rupture | 300 % |

Dans cet exemple, on a effectué les mesures sur la bande obtenue après extrusion et irradiation à 25°C durant 0,5 s. Toutefois, cette bande est un produit qui peut être formé notamment par thermoformage à une configuration désirée, avant l'exposition aux rayonnements U.V..

Exemple 4

Selon le même procédé que l'exemple 3, on fabrique une composition contenant comme polyuréthanne thermoplastique, le polyuréthanne de l'exemple 3 et comme oligomère acrylique, un uréthanne acrylique de masse moléculaire 440, obtenu par réaction du tétraméthylène diisocyanate sur l'hydroxyéthylacrylate.

La formulation de la composition est la suivante :

| | |
|---|---|
| Polyuréthanne thermoplastique ( M = 100000 Tg = - 30°C) | 89 parties |
| Oligomère acrylique | 11 parties |
| Photo-initiateur (Irgacure 651) | 2 parties. |

Le bloc obtenu après cuisson est extrudé en feuille d'épaisseur de 1 mm environ.

Les propriétés du produit ainsi obtenu, avant et après irradiation sont indiquées dans le tableau ci-après.

| Composition de l'exemple 4 | Irradiation | | Taux de conversion des insaturations | Insoluble dans $CH_2Cl_2$ | $t_m$ avant irradiation | Tenue en température |
|---|---|---|---|---|---|---|
| | Température | Durée | | | | |
| Après cuisson et refroidissement | sans irradiation | | 0% | 0% | 100-110˚C | 120 à 130˚C (1) |
| Après extrusion | sans irradiation | | 10 à 20 % | 0% | 100˚C | 120˚C à 130˚C (1) |
| | 20˚C 90˚C | 0,5 s 0,5 s | 95 % 100 % | 80 % 100 % | - | 150˚C (2) 160˚C (2) |

(1), (2), voir exemple 1

Exemple 5

On utilise les mêmes produits et le même procédé que pour l'exemple 4. La formulation de la composition est la suivante :

| | |
|---|---|
| polyuréthanne thermoplastique (M = 100 000 Tg = - 30°C) | 95 parties |
| oligomère acrylique (M : 440) | 5 parties |
| photo-initiateur | 1 partie |

Le bloc obtenu après cuisson à 125°C pendant 20 heures est broyé puis extrudé en bande de largeur 10 cm et épaisseur 1 mm.

Les propriétés de la composition sont indiquées dans le tableau suivant.

| Composition de l'exemple 5 | Irradiation | | Taux de conversion des insaturations | Insoluble dans $CH_2Cl_2$ | $t_m$ avant irradiation | Tenue en température |
|---|---|---|---|---|---|---|
| | Température | Durée | | | | |
| Après cuisson et refroidissement | sans irradiation | | 0% | 0% | 120˚C | 130˚C (1) |
| Après extrusion | sans irradiation | | ≃ 10 % | 0% | 100 à 110˚C | 130˚C (2) |
| | 20˚C | 0,5 s | 80 % | 20 % | - | 150˚C (2) |
| | 100˚C | 0,5 s | 100 % | 40 % | - | 160˚C (2) |

(1), (2), voir exemple 1

Les propriétés mécaniques en traction de la composition, avant et après irradiation, figurent dans le tableau suivant, comparativement à celles du polyuréthanne thermoplastique solide de masse 100.000 utilisé dans cet exemple. Elles ont été mesurées sur film, à une vitesse de traction de 450 mm/min, à trois températures différentes (+ 20°C, + 60°C et + 80°C).

| Température des mesures | 20°C | | | 60°C | | | 80°C | | |
|---|---|---|---|---|---|---|---|---|---|
| Propriétés mécaniques | $\sigma$100% | $\sigma_r$ | $A_r$% | $\sigma$100% | $\sigma_r$ | $A_r$% | $\sigma$100% | $\sigma_r$ | $A_r$% |
| Produits testés | | | | | | | | | |
| Polyuréthanne thermoplast. de masse 100.000 utili. sé dans l'ex. 5 | 7 | 22 | 520 | 4,1 | 3 | 720 | 0,9 | 1 à $A_r = 10^3$% | >$10^3$ |
| Composition de l'exemple 5 sans irradiation | 4,0 | 23 | 550 | 2,3 | 4 | 600 | 1,2 | 1,3 à $A_r = 10^3$% | >$10^3$ |
| Composition de l'exemple 5 irradiée 0,5 s à 20°C | 4,5 | 25 | 430 | 2,4 | 6 | 500 | 1,7 | 2,6 | 480 |
| Composition de l'exemple 5 irradiée 0,5 s à 100°C | 4,9 | 26 | 380 | 2,15 | 8 | 520 | 1,9 | 4 | 420 |
| $\sigma$100 % : contrainte à 100 % d'allongement (en MPa)<br>$\sigma_r$ : contrainte à la rupture (en MPa)<br>$A_r$ % : allongement à la rupture. | | | | | | | | | |

On constate, qu'après irradiation, le film, tout en conservant sa souplesse, présente de meilleures propriétés mécaniques en température.

Exemple 6

On prépare une composition selon le mode opératoire de l'exemple 1.

Le polymère thermoplastique est un polymère de masse moléculaire 20000. Il est obtenu comme dans l'exemple 1, mais avec un rapport NCO/OH = 0,90.

L'oligomère acrylique est l'oligomère utilisé dans l'exemple 4 de masse moléculaire 440.

La solution dans le tétrahydrofuranne présente un extrait sec égal à 15 %.

La formulation de la composition est la suivante :

| | |
|---|---|
| Polyuréthanne thermoplastique ( M = 20000 Tg = - 20°C) | 95 parties |
| Oligomère uréthanne acrylique ( M = 440) | 5 parties |
| Photo-initiateur (Irgacure 651) | 1 partie. |

Après évaporation du solvant, on obtient un film sec ayant les propriétés indiquées dans le tableau suivant.

| Composition | Irradiation | | Taux de conversion des insaturations | Insoluble dans $CH_2Cl_2$ | $t_m$ avant irradiation | Tenue en température |
|---|---|---|---|---|---|---|
| | Température | Durée | | | | |
| Polymère thermoplastique seul M : 20000 | sans irradiation | | - | 0 % | 80-90˚C | 110˚C (1) |
| Composition de l'exemple 6 | sans irradiation | | 0 % | 0 % | 80-90˚C | 110˚C (1) |
| | 20˚C | 0,5s | 90 % | 37 % | - | ≥ 140˚C (2) |

(1), (2), voir exemple 1

Les résultats obtenus montrent l'effet important de l'invention sur la tenue en température de la composition, après irradiation, tout en maintenant ou abaissant la température de moulage comparativement à celle du polymère thermoplastique.

Exemple 7

On prépare une composition selon le mode opératoire de l'exemple 1, avec le même polymère thermoplastique, mais en utilisant comme oligomère acrylique un oligomère de masse moléculaire 4500 obtenu par réaction du tétraméthylène diisocyanate sur un polyester diol de masse moléculaire 2800 en présence d'hydoxyéthylacrylate.

La formulation de la composition est la suivante :

| Polymère thermoplastique ( M = 120000 Tg = - 30°C) | 55 parties |
| Oligomère acrylique M = 4500 | 45 parties |
| Photo-initiateur (Irgacure 651) | 2 parties. |

Les propriétés du film sec obtenu sont énumérées dans le tableau suivant :

| Composition de l'exemple 7 | Irradiation | | Taux de conversion des insaturations | Insoluble dans $CH_2Cl_2$ | $t_m$ avant irradiation | Tenue en température |
|---|---|---|---|---|---|---|
| | Température | Durée | | | | |
| Après | sans irradiation | | 0% | 0% | 60-70°C | 100°C (1) |
| sèchage | 25°C | 0,5 s | 80 % | 72 % | - | 140°C à 150°C (2) |
| du film | 70°C | 0,5 s | 100 % | 100 % | - | 150°C (2) |

(1), (2), voir exemple 1

Exemple 8

On prépare une composition selon le mode opératoire de l'exemple 3, en utilisant le même polymère thermoplastique mais comme oligomère acrylique, le tripropylène glycol diacrylate (TPGDA) qui ne contient aucun groupement uréthanne.

La formulation de la composition est la suivante :

| Polymère thermoplastique ( M = 100000 Tg = - 30°C) | 94 parties |
| Tripropylèneglycoldiacrylate | 6 parties |
| Photo-initiateur (Irgacure 651) | 1 partie. |

Les propriétés de la composition obtenue sont les suivantes :

14

| Composition de l'exemple 8 | Irradiation | | Taux de conversion des insaturations | Insoluble dans $CH_2Cl_2$ | $t_m$ avant irradiation | Tenue en température |
|---|---|---|---|---|---|---|
| | Température | Durée | | | | |
| Après cuisson et refroidissement | sans irradiation | | 0% | 0% | 90-à 100°C | 120°C (1) |
| Après extrusion | sans irradiation | | 10% | 0% | 90-à 100°C | 110°C à 120°C (1) |
| | 25°C | 0,5 s | 80-90% | 55 % | - | >150°C (2) |
| | 90°C à 100°C | 0,5 s | 100 % | 67 % | - | >150°C (2) |

(1), (2), voir exemple 1

Exemple 9

On prépare une composition selon le mode opératoire que l'exemple 1 en utilisant le même oligomère acrylique uréthanne et le même photoinitiateur mais en utilisant du polychlorure de vinyle (PVC) contenant un plastifiant alimentaire (Bouteille PVC) comme polymère thermoplastique solide.

La formulation de la composition est la suivante :

| PVC | 90 parties |
|---|---|
| Oligomère acrylique uréthanne | 10 parties |
| Photoinitiateur (Irgacure 651) | 2 parties. |

On a obtenu les résultats suivants :

| Composition | Irradiation | | tm avant irradiation | Tenue en température |
|---|---|---|---|---|
| | Température | Durée | | |
| PVC seul (Tg ≈ + 65˚C) | sans irradiation | | ≈ 65˚C | ≈ 90˚C (fluage) |
| Composition de l'exemple 9 (Tg ≈ + 15˚C) | sans irradiation | | ≈ 35˚C | ≈ 70-80˚C (fluage) |
| | 20˚C | 0,5 s | - | ≈ 130˚C (fluage, bru nissement, décomposition) |

**Revendications**
**Revendications pour les Etats contractants suivants : BE, DE, FR, GB. IT, NL**

1. Composition solide thermoplastique radioréticulable, caractérisée en ce qu'elle comprend au moins un polymère thermoplastique solide ne contenant pas d'insaturations et un oligomère polyuréthanne radioréticulable compatible avec ce polymère, contenant au moins deux insaturations éthyléniques, chacune de ces insaturations étant située soit en bout de chaîne soit en position pendante, et en ce que le rapport pondéral entre le (ou les) polymère thermoplastique solide et l'oligomère radioréticulable est respectivement compris entre 55/45 et 96/4, de préférence entre 70/30 et 96/4.

2. Composition selon la revendication 1, caractérisée en ce que la température de radioréticulation de la composition est comprise entre la température de transition vitreuse (Tg) de la composition et la température de ramollissement de celle-ci.

3. Composition selon l'une quelconque des revendications 1 et 2, caractérisée en ce que les insaturations éthyléniques de l'oligomère radioréticulable sont de type acrylique, méthacrylique, vinylique ou allylique.

4. Composition selon la revendication 1, caractérisée en ce que l'oligomère radioréticulable a une masse moléculaire comprise entre 400 et 6 000, de préférence entre 400 et 4 500.

5. Composition selon l'une quelconque des revendications 3 et 4, caractérisée en ce que l'oligomère radioréticulable contient au moins deux fonctions acryliques.

6. Composition selon la revendication 1, caractérisée en ce que le polymère thermoplastique solide a une masse moléculaire comprise entre 10 000 et 200 000, de préférence entre 40 000 et 150 000.

7. Composition selon l'une quelconque des revendications 1 et 6, caractérisée en ce que le polymère thermoplastique solide est utilisé en mélange avec un plastifiant.

8. Composition selon l'une quelconque des revendications 6 et 7, caractérisée en ce que le polymère thermoplastique solide est un polyuréthanne.

9. Composition selon la revendication 8, caractérisée en ce que le polymère thermoplastique solide est obtenu en présence d'un diol court extenseur de chaîne par réaction d'un polyisocyanate avec au moins un polyol choisi dans le groupe constitué par les polyétherpolyols, les polyesterpolyols, les polyétherpolyesterpolyols, les polycaprolactones, les polytétrahydrofurannes, les polycarbonatepolyols et les polybutadiènes hydroxylés.

10. Composition selon l'une quelconque des revendications 8 et 9, caractérisée en ce que le polymère thermoplastique solide et l'oligomère radioréticulable sont des polyuréthannes obtenus à partir soit d'un même polyisocyanate soit d'un même polyol.

11. Composition selon l'une quelconque des revendications précédentes caractérisée en ce que l'oligomère radioréticulable est obtenu par fixation d'insaturations éthyléniques, soit en bout de chaîne soit en position pendante, sur un composé contenant des fonctions uréthannes.

12. Composition selon la revendication 11, caractérisée en ce que le composé contenant des fonctions uréthannes est obtenu par réaction d'un diisocyanate avec au moins un polyol choisi dans le groupe constitué par les polyéther-polyols, les polyesterpolyols, les polyétherpolyester-polyols, les polycaprolactones, les polytétrahydro-furannes, les polycarbonatepolyols et les polybutadiènes hydroxylés.

13. Composition selon l'une quelconque des revendications précédentes caractérisée en ce que le polymère thermoplastique solide est un polyuréthanne aliphatique et en ce que l'oligomère radioréticulable est un oligomère aliphatique acrylique ou méthacrylique, de préférence acrylique.

**14.** Produits solides, durcissables par radioréticulation, obtenus par mise en forme ou imprégnation d'une composition selon l'une quelconque des revendications 1 à 13 ou par évaporation d'une solution de cette composition.

**15.** Produits solides selon la revendication 14 caractérisés en ce qu'ils sont obtenus par mise en forme d'une composition selon l'une quelconque des revendications 1 à 13 et en ce qu'ils se présentent sous forme de blocs compacts, de feuilles, de granulés, de plaques, de tiges, de joncs, de tubes ou de barres.

**Revendications pour l'Etat contractant suivant : ES**

**1.** Composition solide thermoplastique radioréticulable, caractérisée en ce qu'elle comprend au moins un polymère thermoplastique solide ne contenant pas d'insaturations et un oligomère radioréticulable compatible avec ce polymère, contenant au moins deux insaturations éthyléniques, chacune de ces insaturations étant située soit en bout de chaîne soit en position pendante, et en ce que le rapport pondéral entre le (ou les) polymère thermoplastique solide et l'oligomère radioréticulable est respectivement compris entre 55/45 et 96/4, de préférence entre 70/30 et 96/4.

**2.** Composition selon la revendication 1, caractérisée en ce que la température de radioréticulation de la composition est comprise entre la température de transition vitreuse (Tg) de la composition et la température de ramollissement de celle-ci.

**3.** Composition selon l'une quelconque des revendications 1 et 2, caractérisée en ce que les insaturations éthyléniques de l'oligomère radioréticulable sont de type acrylique, méthacrylique, vinylique ou allylique.

**4.** Composition selon la revendication 1, caractérisée en ce que l'oligomère radioréticulable a une masse moléculaire comprise entre 400 et 6 000, de préférence entre 400 et 4 500.

**5.** Composition selon l'une quelconque des revendications 3 et 4, caractérisée en ce que l'oligomère radioréticulable contient au moins deux fonctions acryliques.

**6.** Composition selon la revendication 1, caractérisée en ce que le polymère thermoplastique solide a une masse moléculaire comprise entre 10 000 et 200 000, de préférence entre 40 000 et 150 000.

**7.** Composition selon l'une quelconque des revendications 1 et 6, caractérisée en ce que le polymère thermoplastique solide est utilisé en mélange avec un plastifiant.

**8.** Composition selon l'une quelconque des revendications 6 et 7, caractérisée en ce que le polymère thermoplastique solide est un polyuréthanne.

**9.** Composition selon la revendication 8, caractérisée en ce que le polymère thermoplastique solide est obtenu en présence d'un diol court extenseur de chaîne par réaction d'un polyisocyanate avec au moins un polyol choisi dans le groupe constitué par les polyétherpolyols, les polyesterpolyols, les polyétherpolyesterpolyols, les polycaprolactones, les polytétrahydrofurannes, les polycarbonatepolyols et les polybutadiènes hydroxylés.

**10.** Composition selon l'une quelconque des revendications 1, 4 et 5, caractérisée en ce que l'oligomère radioréticulable est un polyuréthanne.

**11.** Composition selon la revendication 10, caractérisée en ce que l'oligomère radioréticulable est obtenu par fixation d'insaturations éthyléniques, soit en bout de chaîne soit en position pendante, sur un composé contenant des fonctions uréthannes.

**12.** Composition selon la revendication 11, caractérisée en ce que le composé contenant des fonctions uréthannes est obtenu par réaction d'un diisocyanate avec au moins un polyol choisi dans le groupe constitué par les polyétherpolyols, les polyesterpolyols, les polyétherpolyesterpolyols, les polycaprolactones, les polytétrahydrofurannes, les polycarbonatepolyols et les polybutadiènes hydroxylés.

**13.** Composition selon l'une quelconque des revendications 8 à 12, caractérisée en ce que le polymère thermoplastique solide et l'oligomère radioréticulable sont des polyuréthannes obtenus à partir soit d'un même polyisocyanate soit d'un même polyol.

**14.** Composition selon l'une quelconque des revendications 1 à 9 caractérisée en ce que le polymère thermoplastique solide est un polyuréthanne aliphatique et en ce que l'oligomère radioréticulable est un oligomère aliphatique acrylique ou méthacrylique, de préférence acrylique.

**15.** Produits solides, durcissables par radioréticulation, obtenus par mise en forme ou imprégnation d'une composition selon l'une quelconque des revendications 1 à 14 ou par évaporation d'une solution de cette composition.

**16.** Produits solides selon la revendication 15 caractérisés en ce qu'ils sont obtenus par mise en forme d'une composition selon l'une quelconque des revendications 1 à 14 et en ce qu'ils se présentent sous forme de blocs compacts, de feuilles, de granulés, de plaques, de tiges, de joncs, de tubes ou de barres.

**Claims**
**Claims for the following Contracting States : BE DE, FR, GB, IT, NL**

**1.** Radiocrosslinkable thermoplastic solid composition characterised in that it comprises at least one solid thermoplastic polymer containing no unsaturations and a radiocrosslinkable polyurethane oligomer compatible with this polymer, containing at least two ethylenic unsaturations, each of these unsaturations being situated either at the end of a chain or in a pendent position, and in that the weight ratio of the solid thermoplastic polymer(s) to the radiocrosslinkable oligomer is between 55/45 and 96/4, respectively, preferably between 70/30 and 96/4.

**2.** Composition according to Claim 1, characterised in that the radiocrosslinking temperature of the composition is between the glass transition temperature (Tg) of the composition and the softening temperature thereof.

**3.** Composition according to either of Claims 1 and 2, characterised in that the ethylenic unsaturations of the radiocrosslinkable oligomer are of acrylic, methacrylic, vinyl or allyl type.

**4.** Composition according to Claim 1, characterised in that the radiocrosslinkable oligomer has a molecular mass of between 400 and 6,000, preferably between 400 and 4,500.

**5.** Composition according to either of Claims 3 and 4, characterised in that the radiocrosslinkable oligomer contains at least two acrylic functional groups.

**6.** Composition according to Claim 1, characterised in that the solid thermoplastic polymer has a molecular mass of between 10,000 and 200,000, preferably between 40,000 and 150,000.

**7.** Composition according to either of Claims 1 and 6, characterised in that the solid thermoplastic polymer is employed mixed with a plasticiser.

**8.** Composition according to either of Claims 6 and 7, characterised in that the solid thermoplastic polymer is a polyurethane.

**9.** Composition according to Claim 8, characterised in that the solid thermoplastic polymer is obtained in the presence of a short chain-extender diol by reaction of a polyisocyanate with at least one polyol chosen from the group consisting of polyetherpolyols, polyesterpolyols, polyetherpolyesterpolyols, polycaprolactones, polytetrahydrofurans, polycarbonatepolyols and hydroxylated polybutadienes.

**10.** Composition according to either of Claims 8 and 9, characterized in that the solid thermoplastic polymer and the radiocrosslinkable oligomer are polyurethanes obtained either from the same single polyisocyanate or the same single polyol.

11. Composition according to any one of the preceding claims, characterised in that the radiocrosslinkable oligomer is obtained by attaching ethylenic unsaturations, either at the end of a chain or in a pendent position, to a compound containing urethane functional groups.

12. Composition according to Claim 11, characterised in that the compound containing urethane functional groups is obtained by reaction of a diisocyanate with at least one polyol chosen from the group consisting of polyetherpolyols, polyesterpolyols, polyetherpolyesterpolyols, polycaprolactones, polytetrahydrofurans, polycarbonatepolyols and hydroxylated polybutadienes.

13. Composition according to any one of the preceding claims, characterised in that the solid thermoplastic polymer is an aliphatic polyurethane and in that the radiocrosslinkable oligomer is an acrylic or methacrylic, preferably acrylic, aliphatic oligomer.

14. Solid products which can be cured by radiocrosslinking, obtained by forming or impregnating a composition according to any one of Claims 1 to 13 or by evaporation of a solution of this composition.

15. Solid products according to Claim 14, characterised in that they are obtained by forming a composition according to any one of Claims 1 to 13 and in that they are in the form of compact blocks, sheets, granules, plates, rods, canes, tubes or bars.

**Claims for the following Contracting State : ES**

1. Radiocrosslinkable thermoplastic solid composition characterised in that it comprises at least one solid thermoplastic polymer containing no unsaturations and a radiocrosslinkable oligomer compatible with this polymer, containing at least two ethylenic unsaturations, each of these unsaturations being situated either at the end of a chain or in a pendent position, and in that the weight ratio of the solid thermoplastic polymer(s) to the radiocrosslinkable oligomer is between 55/45 and 96/4, respectively, preferably between 70/30 and 96/4.

2. Composition according to Claim 1, characterised in that the radiocrosslinking temperature of the composition is between the glass transition temperature (Tg) of the composition and the softening temperature thereof.

3. Composition according to either of Claims 1 and 2, characterised in that the ethylenic unsaturations of the radiocrosslinkable oligomer are of acrylic, methacrylic, vinyl or allyl type.

4. Composition according to Claim 1, characterised in that the radiocrosslinkable oligomer has a molecular mass of between 400 and 6,000, preferably between 400 and 4,500.

5. Composition according to either of Claims 3 and 4, characterised in that the radiocrosslinkable oligomer contains at least two acrylic functional groups.

6. Composition according to Claim 1, characterised in that the solid thermoplastic polymer has a molecular mass of between 10,000 and 200,000, preferably between 40,000 and 150,000.

7. Composition according to either of Claims 1 and 6, characterised in that the solid thermoplastic polymer is employed mixed with a plasticiser.

8. Composition according to either of Claims 6 and 7, characterised in that the solid thermoplastic polymer is a polyurethane.

9. Composition according to Claim 8, characterised in that the solid thermoplastic polymer is obtained in the presence of a short chain-extender diol by reaction of a polyisocyanate with at least one polyol chosen from the group consisting of polyetherpolyols, polyesterpolyols, polyetherpolyesterpolyols, polycaprolactones, polytetrahydrofurans, polycarbonatepolyols and hydroxylated polybutadienes.

10. Composition according to any one of Claims 1, 4 and 5, characterised in that the radiocrosslinkable oligomer is a polyurethane.

**11.** Composition according to Claim 10, characterised in that the radiocrosslinkable oligomer is obtained by attaching ethylenic unsaturations, either at the end of a chain or in a pendent position, to a compound containing urethane functional groups.

**12.** Composition according to Claim 11, characterised in that the compound containing urethane functional groups is obtained by reaction of a diisocyanate with at least one polyol chosen from the group consisting of polyetherpolyols, polyesterpolyols, polyetherpolyesterpolyols, polycaprolactones, polytetrahydrofurans, polycarbonatepolyols and hydroxylated polybutadienes.

**13.** Composition according to any one of Claims 8 to 12, characterised in that the solid thermoplastic polymer and the radiocrosslinkable oligomer are polyurethanes obtained either from the same single polyisocyanate or the same single polyol.

**14.** Composition according to any one of Claims 1 to 9, characterised in that the solid thermoplastic polymer is an aliphatic polyurethane and in that the radiocrosslinkable oligomer is an acrylic or methacrylic, preferably acrylic, aliphatic oligomer.

**15.** Solid products which can be cured by radiocrosslinking, obtained by forming or impregnating a composition according to any one of Claims 1 to 14 or by evaporation of a solution of this composition.

**16.** Solid products according to Claim 15, characterised in that they are obtained by forming a composition according to any one of Claims 1 to 14 and in that they are in the form of compact blocks, sheets, granules, plates, rods, canes, tubes or bars.

**Patentansprüche**
**Patentansprüche für folgende Vertragsstaaten : BE, DE, FR, GB, IT, NL**

**1.** Feste thermoplastische strahlungsvernetzbare Zusammensetzung,

dadurch gekennzeichnet, daß

sie mindestens ein festes thermoplastisches Polymer, das keine ungesättigten Gruppierungen enthält, und ein strahlungsvernetzbares Polyurethanoligomer enthält, das mit diesem Polymer verträglich ist und das mindestens zwei ethylenische Doppelbindungen aufweist, die sich jeweils am Kettenende oder in einer Position dazwischen befinden, und das Gewichtsverhältnis zwischen dem (oder den) thermoplastischen festen Polymer und dem strahlungsvernetzbaren Oligomer 55/45 bis 96/4 und vorzugsweise 70/30 bis 96/4 beträgt.

**2.** Zusammensetzung nach Anspruch 1, dadurch gekennzeichnet, daß die Temperatur der Strahlungsvernetzung der Zusammensetzung zwischen der Glasübergangstemperatur (Tg) der Zusammensetzung und ihrer Erweichungstemperatur liegt.

**3.** Zusammensetzung nach Anspruch 1 oder 2, dadurch gekennzeichnet, daß die ethylenischen Doppelbindungen des strahlungsvernetzbaren Oligomers von Acryl-, Methacryl-, Vinyl- oder Allylgruppen stammen.

**4.** Zusammensetzung nach Anspruch 1, dadurch gekennzeichnet, daß das strahlungsvernetzbare Oligomer eine Molekülmasse von 400 und 6000 und vorzugsweise 400 bis 4500 besitzt.

**5.** Zusammensetzung nach Anspruch 3 oder 4, dadurch gekennzeichnet, daß das strahlungsvernetzbare Oligomer mindestens zwei Acrylfunktionen enthält.

**6.** Zusammensetzung nach Anspruch 1, dadurch gekennzeichnet, daß das thermoplastische feste Polymer eine Molekülmasse von 10 000 und 200 000 und vorzugsweise 40 000 bis 150 000 besitzt.

**7.** Zusammensetzung nach einem der Ansprüche 1 und 6, dadurch gekennzeichnet, daß das thermoplastische feste Polymer im Gemisch mit einem Weichmacher eingesetzt ist.

22

8. Zusammensetzung nach einem der Ansprüche 6 und 7, dadurch gekennzeichnet, daß das thermoplastische feste Polymer ein Polyurethan ist.

9. Zusammensetzung nach Anspruch 8, dadurch gekennzeichnet, daß das feste thermoplastische Polymer in Anwesenheit eines kurzen, kettenverlängernden Diols durch Umsetzung eines Polyisocyanats mit mindestens einem Polyol erhalten ist, das unter Polyetherpolyolen, Polyesterpolyolen, Polyetherpolyesterpolyolen, Polycaprolactonen, Polytetrahydrofuranen, Polycarbonatpolyolen und hydroxylierten Polybutadienen ausgewählt ist.

10. Zusammensetzung nach einem der Ansprüche 8 und 9, dadurch gekennzeichnet, daß das feste thermoplastische Polymer und das strahlungsvernetzbare Oligomer Polyurethane sind, die aus dem gleichen Isocyanat oder dem gleichen Polyol erhalten sind.

11. Zusammensetzung nach einem der vorangegangenen Ansprüche, dadurch gekennzeichnet, daß das strahlungsvernetzbare Oligomer durch Bindung der ethylenischen Doppelbindungen am Kettenende oder in einer Position dazwischen an eine Urethangruppen enthaltende Verbindung erhalten ist.

12. Zusammensetzung nach Anspruch 11, dadurch gekennzeichnet, daß die Urethangruppen enthaltende Verbindung durch Umsetzung eines Diisocyanats mit mindestens einem Polyol erhalten ist, das unter Polyetherpolyolen, Polyesterpolyolen, Polyetherpolyesterpolyolen, Polycaprolactonen, Polytetrahydrofuranen, Polycarbonatpolyolen und hydroxylierten Polybutadienen ausgewählt ist.

13. Zusammensetzung nach einem der vorhergehenden Ansprüche, dadurch gekennzeichnet, daß das feste thermoplastische Polymer ein aliphatisches Polyurethan und das strahlungsvernetzbare Oligomer ein aliphatisches Acryl- oder Methacryloligomer und vorzugsweise ein Acryloligomer sind.

14. Feste, durch Strahlungsvernetzung härtbare Produkte, die durch Formung oder Imprägnieren einer Zusammensetzung nach einem der Ansprüche 1 bis 13 oder durch Eindampfen einer Lösung dieser Zusammensetzung erhalten sind.

15. Feste Produkte nach Anspruch 14, daß sie durch Formung einer Zusammensetzung nach einem der Ansprüche 1 bis 13 erhalten sind und in Form von festen Blöcken, Folien, Granulaten, Platten, Spindeln, Stäben, Rohren oder Stangen vorliegen.

**Patentansprüche für folgenden Vertragsstaat : ES**

1. Feste thermoplastische strahlungsvernetzbare Zusammensetzung,

dadurch gekennzeichnet, daß

sie mindestens ein festes thermoplastisches Polymer, das keine ungesättigten Gruppierungen enthält, und ein strahlungsvernetzbares Oligomer enthält, das mit diesem Polymer verträglich ist und das mindestens zwei ethylenische Doppelbindungen aufweist, die sich jeweils am Kettenende oder in einer Position dazwischen befinden, und das Gewichtsverhältnis zwischen dem (oder den) thermoplastischen festen Polymer und dem strahlungsvernetzbaren Oligomer 55/45 bis 96/4 und vorzugsweise 70/30 bis 96/4 beträgt.

2. Zusammensetzung nach Anspruch 1, dadurch gekennzeichnet, daß die Temperatur der Strahlungsvernetzung der Zusammensetzung zwischen der Glasübergangstemperatur (Tg) der Zusammensetzung und ihrer Erweichungstemperatur liegt.

3. Zusammensetzung nach Anspruch 1 oder 2, dadurch gekennzeichnet, daß die ethylenischen Doppelbindungen des strahlungsvernetzbaren Oligomers von Acryl-, Methacryl-, Vinyl- oder Allylgruppen stammen.

4. Zusammensetzung nach Anspruch 1, dadurch gekennzeichnet, daß das strahlungsvernetzbare Oligomer eine Molekülmasse von 400 und 6000 und vorzugsweise 400 bis 4500 besitzt.

**5.** Zusammensetzung nach Anspruch 3 oder 4, dadurch gekennzeichnet, daß das strahlungsvernetzbare Oligomer mindestens zwei Acrylfunktionen enthält.

**6.** Zusammensetzung nach Anspruch 1, dadurch gekennzeichnet, daß das thermoplastische feste Polymer eine Molekülmasse von 10 000 und 200 000 und vorzugsweise 40 000 bis 150 000 besitzt.

**7.** Zusammensetzung nach einem der Ansprüche 1 und 6, dadurch gekennzeichnet, daß das thermoplastische feste Polymer im Gemisch mit einem Weichmacher eingesetzt ist.

**8.** Zusammensetzung nach einem der Ansprüche 6 und 7, dadurch gekennzeichnet, daß das thermoplastische feste Polymer ein Polyurethan ist.

**9.** Zusammensetzung nach Anspruch 8, dadurch gekennzeichnet, daß das feste thermoplastische Polymer in Anwesenheit eines kurzen, kettenverlängernden Diols durch Umsetzung eines Polyisocyanats mit mindestens einem Polyol erhalten ist, das unter Polyetherpolyolen, Polyesterpolyolen, Polyetherpolyesterpolyolen, Polycaprolactonen, Polytetrahydrofuranen, Polycarbonatpolyolen und hydroxylierten Polybutadienen ausgewählt ist.

**10.** Zusammensetzung nach einem der Ansprüche 1, 4 und 5, dadurch gekennzeichnet, daß das strahlungsvernetzbare Oligomer ein Polyurethan ist.

**11.** Zusammensetzung nach Anspruch 10, dadurch gekennzeichnet, daß das strahlungsvernetzbare Oligomer durch Bindung der ethylenischen Doppelbindungen am Kettenende oder in einer Position dazwischen an eine Urethangruppen enthaltende Verbindung erhalten ist.

**12.** Zusammensetzung nach Anspruch 11, dadurch gekennzeichnet, daß die Urethangruppen enthaltende Verbindung durch Umsetzung eines Diisocyanats mit mindestens einem Polyol erhalten ist, das aus der Gruppe der Polyetherpolyole, Polyesterpolyole, Polyetherpolyesterpolyole, Polycaprolactonen, Polytetrahydrofuranen, Polycarbonatpolyolen und hydroxylierten Polybutadienen ausgewählt ist.

**13.** Zusammensetzung nach einem der Ansprüche 8 bis 12, dadurch gekennzeichnet, daß das feste thermoplastische Polymer und das strahlungsvernetzbare Oligomer Polyurethane sind, die ausgehend vom gleichen Polyisocyanat oder vom gleichen Polyol erhalten sind.

**14.** Zusammensetzung nach einem der Ansprüche 1 bis 9, dadurch gekennzeichnet, daß das thermoplastische feste Polymer ein aliphatisches Polyurethan und das strahlungsvernetzbare Oligomer ein aliphatisches Acryloder Methacryloligomer, vorzugsweise ein Acryloligomer, sind.

**15.** Feste, durch Strahlungsvernetzung härtbare Produkte, die durch Formung oder Imprägnieren einer Zusammensetzung nach einem der Ansprüche 1 bis 14 oder durch Eindampfen einer Lösung dieser Zusammensetzung erhalten sind.

**16.** Feste Produkte nach Anspruch 15, dadurch gekennzeichnet, daß sie durch Formung einer Zusammensetzung nach einem der Ansprüche 1 bis 14 erhalten sind und in Form von festen Blöcken, Folien, Granulaten, Scheiben, Spindeln, Stäben, Rohren oder Stangen vorliegen.